# EUROPEAN PATENT SPECIFICATION

(11) **EP 4 507 094 B1**
(45) Date of publication and mention of the grant of the patent: **04.11.2026**
(21) Application number: 23890352.0
(22) Date of filing: 31.08.2023
(51) Int. Cl.: H01M 50/244, H01M 50/102, H01M 50/242, H01M 50/119, H01M 50/122, H01M 50/124, H01M 50/531

(54) **BATTERY AND ELECTRONIC DEVICE**
BATTERIE UND ELEKTRONISCHE VORRICHTUNG
BATTERIE ET DISPOSITIF ÉLECTRONIQUE

(30) Priority: 15.11.2022 CN 202223033849 U
(43) Date of publication of application: 12.02.2025
(73) Proprietor: Zhuhai CosMX Battery Co., Ltd., Zhuhai, Guangdong 519180 (CN)
(72) Inventor: LIN, Yongtao, Zhuhai, Guangdong 519180 (CN); SHENG, Donghui, Zhuhai, Guangdong 519180 (CN); XIE, Jichun, Zhuhai, Guangdong 519180 (CN)
(74) Representative: Vossius & Partner Patentanwälte Rechtsanwälte mbB
(86) International application number: PCT/CN2023/116289
(87) International publication number: WO 2024/103915

(56) References cited:
- CN-A- 106 505 169
- CN-A- 114 597 610
- CN-A- 114 696 047
- CN-U- 204 243 090
- CN-U- 212 323 082
- CN-U- 214 898 606
- CN-U- 215 933 664
- CN-U- 218 677 425
- US-A1- 2014 255 747

## Description

### TECHNICAL FIELD

The present invention relates to the field of new energy and, in particular, to a battery and an electronic device.

### BACKGROUND

Battery is a device that converts chemical energy into electrical energy, which is widely used in life. With the development of battery industry, the requirements for battery performance are getting higher and higher.

An existing battery generally includes a battery cell and a housing. The battery cell is disposed inside the housing, and the housing is used for protecting the battery cell. The housing is generally made of a material with good mechanical properties, such as stainless steel, aluminum alloy, etc.

CN 204243090U specifically relates to a high-performance power lithium-ion battery comprising a top cover, an aluminum shell, and a plurality of polymer soft-pack batteries. The top cover includes a positive electrode pole and a negative electrode pole. The polymer soft-pack batteries are introduced with positive and negative electrode tabs. The plurality of polymer soft-pack batteries are connected in parallel to form a battery assembly, which is housed within the cavity of aluminum shell.

However, the inventor finds that due to poor toughness of the housing, the edge of the housing where the stress is concentrated is easy to be damaged by external forces, resulting in leakage problems.

### SUMMARY

The present invention is set out in the appended set of claims.

In order to solve at least one of the problems mentioned in the background, the present invention provides a battery and an electronic device, preventing the battery from leaking.

In order to achieve the above purpose, the present invention provides the following technical solutions.

In a first aspect, the present invention provides a battery, including a battery cell assembly, a first housing and a pole penetrating through the first housing, where the first housing is provided with an accommodating cavity, and the battery cell assembly is disposed in the accommodating cavity; the battery cell assembly includes a battery cell and a second housing covering the battery cell, where the battery cell is provided with a tab, and the second housing includes a body and a skirt extending outwards from an edge of a side of the body; a side of the second housing facing the tab is provided with an opening, the tab extends out of the skirt from the opening, and the tab is electrically connected with the pole.

As an optional implementation, a projection of the skirt in a thickness direction of the battery at least partially overlaps with a projection of the pole in the thickness direction of the battery.

As an optional implementation, the skirt and the pole are disposed side by side along a thickness direction of the battery.

An accommodating space is formed between the skirt and the body, and the pole is located in the accommodating space.

As an optional implementation, the tab has a connection part extending outside the skirt, and the connection part is electrically connected with a first end of the pole.

As an optional implementation, the connection part is bent and extends towards a direction of the battery cell, and a side wall of the first end of the pole abuts against a surface of the connection part.

As an optional implementation, the connection part is bent and extends to a surface of the second housing, an end of the connection part extends along the surface of the second housing in a direction away from the skirt, and both a side surface and an end surface of the first end abut against the surface of the connection part.

As an optional implementation, a cross section of a second end of the pole is larger than a cross section of the first end of the pole, a step surface is formed at a junction of the second end and the first end, the end of the connection part is bent along the step surface toward the first end of the pole, and a surface of the end of the connection part abuts against the step surface.

As an optional implementation, the first housing is a metal housing, and the second housing is an aluminum-plastic film.

As an optional implementation, a heat dissipation layer is disposed between adjacent wall surfaces of the second housing and the first housing.

As an optional implementation, the battery further includes a protection element, where the protection element includes a leading end and a termination end, the leading end is electrically connected with the pole, and the termination end is electrically connected with the tab.

As an optional implementation, a first insulating member is disposed on a side wall of the skirt, and/or the first insulating member is disposed between the pole and the second housing.

As an optional implementation, a second insulating member is disposed between the first housing and the pole, and the connection part of the tab is located between the second insulating member and the pole.

As an optional implementation, the second insulating member is made of resin or plastic.

As an optional implementation, the battery cell is of a wound structure or a laminated structure.

As an optional implementation, the aluminum-plastic film is formed by bonding nylon, aluminum foil and polypropylene.

As an optional implementation, the pole is made of copper or aluminum.

As an optional implementation, the battery further includes a pole piece, where the pole piece is disposed on a side of the first end of the pole away from the first housing.

As an optional implementation, the pole piece is welded to the first end of the pole.

In a second aspect, the present invention also provides an electronic device, including any battery according to the first aspect.

The battery provided by the present invention includes a battery cell assembly, a first housing and a pole penetrating through the first housing, where the first housing is provided with an accommodating cavity, and the battery cell assembly is disposed in the accommodating cavity; the battery cell assembly includes a battery cell and a second housing covering the battery cell, where the battery cell is provided with a tab, and the second housing includes a body and a skirt extending outwards from an edge of a side of the body; a side of the second housing facing the tab is provided with an opening, the tab extends out of the skirt from the opening, and the tab is electrically connected with the pole. According to the battery provided by the present invention, the battery cell is coated with a layer of the second housing, and the second housing and the battery cell are disposed in the first housing. The liquid leakage at the edge of the battery cell where the stress is concentrated can be effectively prevented through the second housing, and the battery cell can be prevented from directly bearing external force through the first housing. An opening may be reserved at a side of the second housing, and a skirt is disposed at an edge of the opening. The skirt extends to a side of the pole along a length direction of the battery cell, and the tab may extend out of the opening. By being disposed at the side of the pole, the skirt does not need to occupy extra space of the battery along the length direction of the battery, so that the internal structure of the battery is more compact, and more space can be reserved for the battery cell, thereby improving the energy density of the battery.

### BRIEF DESCRIPTION OF DRAWINGS

In order to explain embodiments of the present invention or the technical solutions in the prior art more clearly, the following will make a brief introduction to the drawings needed for the description of the embodiments or the prior art. Apparently, the drawings in the following description are merely a part of embodiments of the present invention.
FIG. 1 is a schematic diagram of an overall structure of a battery according to an embodiment of the present invention.
FIG. 2 is an exploded view of FIG. 1.
FIG. 3 is a schematic diagram of a battery protection element according to an embodiment of the present invention.
FIG. 4 is a section view of a first battery according to an embodiment of the present invention.
FIG. 5 is a section view of a second battery according to an embodiment of the present invention.
FIG. 6 is a section view of a third battery according to an embodiment of the present invention.

Description of reference numerals:
100-battery;
110-battery cell assembly;
111-battery cell;
1111-tab;
1111a-connection part;
112-second housing;
1121-opening;
1122-skirt;
1123-body;
120-first housing;
130-pole;
131-first end;
132-second end;
140-heat dissipation layer;
150-protection element;
151-leading end;
152-termination end;
160-pole piece;
170-second insulating member.

### DESCRIPTION OF EMBODIMENTS

The following clearly and comprehensively describes the technical solutions in embodiments of the present invention with reference to the accompanying drawings in embodiments of the present invention. Apparently, the described embodiments are merely a part of rather than all embodiments of the present invention.

In this application, the terms "above/on", "below", "left", "right", "front", "back", "top", "bottom", "inner", "outer", "vertical", "horizontal", "lateral", "longitudinal", etc., indicate the orientation or positional relationship based on the orientation or positional relationship shown in the drawings. These terms are used primarily to better describe the present invention and embodiments therein, and are not intended to limit that the devices, elements or components referred to must have a specific orientation, or be constructed or operated in a specific orientation.

Moreover, some of the above terms may be used to indicate other meanings in addition to the orientation or positional relationship. For example, the term "on" may also be used to indicate a certain kind of attachment or connection relationship in some cases. For those of ordinary skill in the art, the specific meaning of the above terms in the present invention can be understood according to specific situations.

Furthermore, the terms "mounted", "disposed", "provided," "connected", "connecting" should be understood broadly. For example, it can be a fixed connection, a detachable connection, or an integral construction; it can be a mechanical connection, or an electrical connection; it can be a direct connection, an indirect connection through an intermediary, or an internal communication between two devices, elements or components. For those of ordinary skill in the art, the specific meaning of the above terms in the present invention can be understood according to specific situations.

Furthermore, the terms "first", "second", etc., are used primarily to distinguish between different devices, elements, or components (which may be of the same or different specific types and configurations), and are not intended to indicate or imply the relative importance or number of the devices, elements, or components referred to. "A plurality of" means two or more, unless otherwise clearly defined.

An existing battery generally includes a battery cell and a first housing. The battery cell is disposed inside the first housing, and the first housing is used for protecting the battery cell. The first housing is generally made of a material with good mechanical properties, such as stainless steel, aluminum alloy, etc. However, the inventor finds that due to poor toughness of the first housing, the edge of the first housing where the stress is concentrated is easily damaged by external forces, resulting in leakage problems.

In view of this, the present invention provides a battery. The battery includes a battery cell assembly, a first housing and a pole penetrating through the first housing, where the first housing is provided with an accommodating cavity, and the battery cell assembly is disposed in the accommodating cavity; the battery cell assembly includes a battery cell and a second housing covering the battery cell, where the battery cell is provided with a tab, and the second housing includes a body and a skirt extending outwards from an edge of a side of the body; a side of the second housing facing the tab is provided with an opening, the tab extends out of the skirt from the opening, and the tab is electrically connected with the pole. According to the battery provided by the present invention, the battery cell is coated with a layer of the second housing, and the second housing and the battery cell are disposed in the first housing. The liquid leakage at the edge of the battery cell where the stress is concentrated can be effectively prevented through the second housing, and the battery cell can be prevented from directly bearing external force through the first housing. An opening may be reserved at a side of the second housing, and a skirt is disposed at an edge of the opening. The skirt extends to a side of the pole along a length direction of the battery cell, and the tab may extend out of the opening. By being disposed at the side of the pole, the skirt does not need to occupy extra space of the battery along the length direction of the battery, so that the internal structure of the battery is more compact, and more space can be reserved for the battery cell, thereby improving the energy density of the battery.

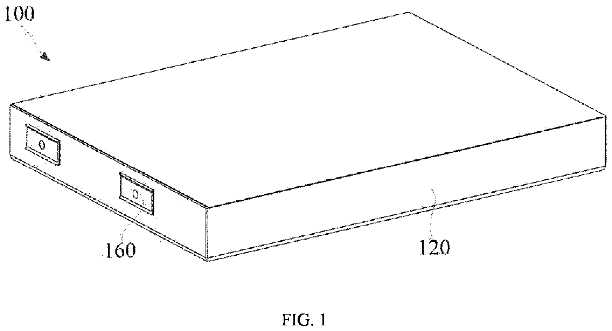

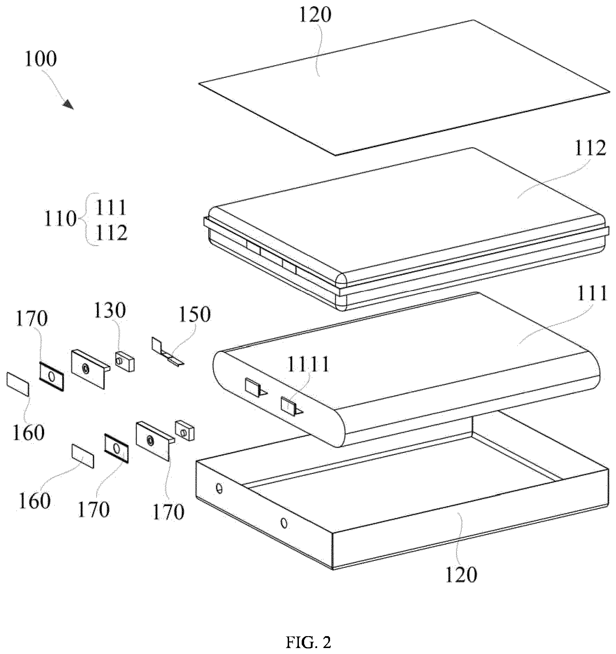

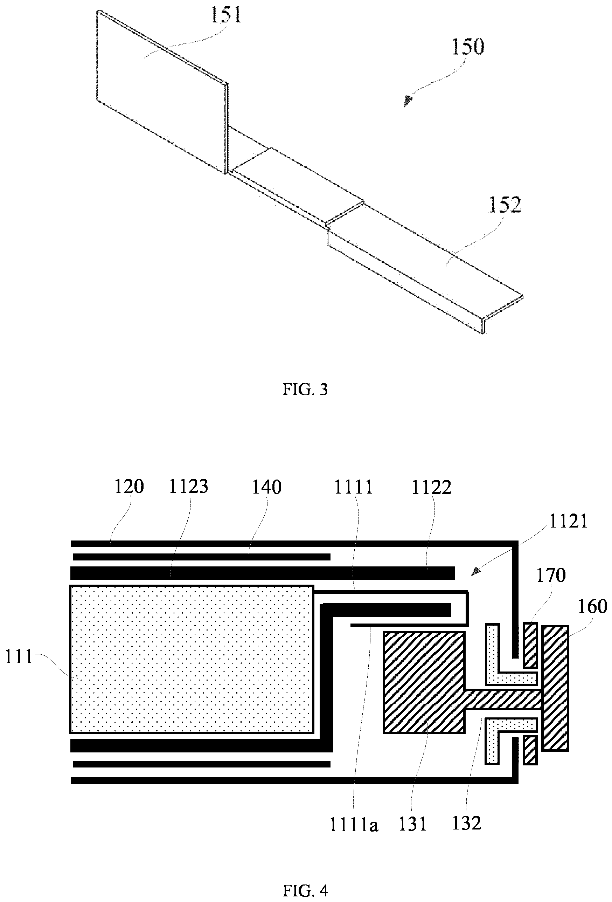

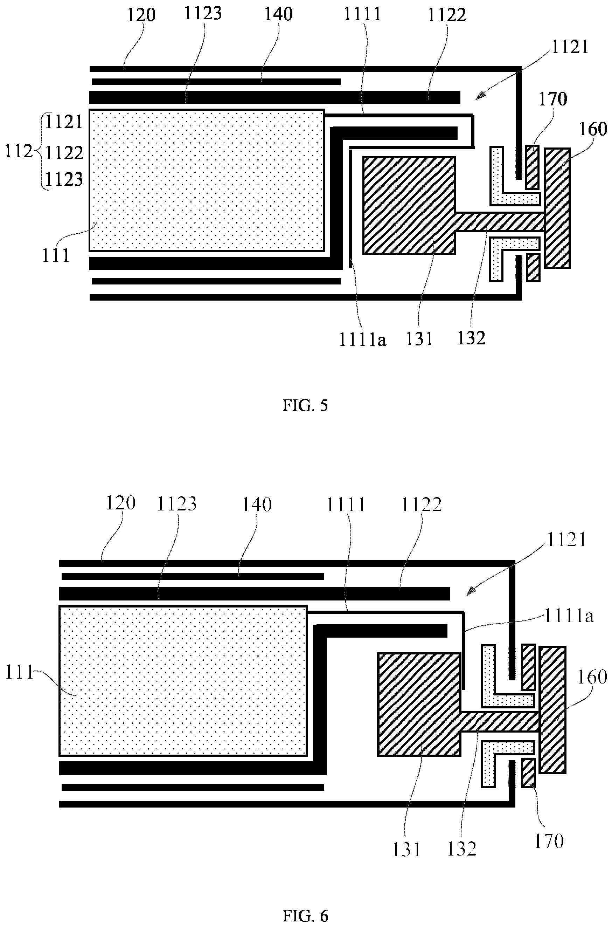

FIG. 1 is a schematic diagram of an overall structure of a battery according to an embodiment of the present invention. FIG. 2 is an exploded view of FIG. 1. FIG. 3 is a schematic diagram of a battery protection element according to an embodiment of the present invention. FIG. 4 is a section view of a first battery according to an embodiment of the present invention. FIG. 5 is a section view of a second battery according to an embodiment of the present invention. FIG. 6 is a section view of a third battery according to an embodiment of the present invention. Referring to FIG. 1 to FIG. 6, the present invention provides a battery 100. The battery 100 includes a battery cell assembly 110, a first housing 120 and a pole 130 penetrating through the first housing 120. The first housing 120 is provided with an accommodating cavity, and the battery cell assembly 110 is disposed in the accommodating cavity. The battery cell assembly 110 includes a battery cell 111 and a second housing 112 covering the battery cell 111. The battery cell 111 is provided with a tab 1111. The second housing 112 includes a body 1123 and a skirt 1122 extending outwards from an edge of a side of the body 1123. A side of the second housing 112 facing the tab 1111 is provided with an opening 1121, and the tab 1111 extends out of the skirt 1122 from the opening 1121. The tab 1111 is electrically connected with the pole 130.

The battery cell 111 includes a negative electrode made of a negative electrode material, a positive electrode made of a positive electrode material, and a separator for separating the positive electrode from the negative electrode. The battery cell 110 may be disposed in a wound type, a laminated type, etc., which is not specifically limited in this embodiment.

The function of the first housing 120 is to protect the battery cell 111 therein. The first housing 120 may be formed by splicing two parts to facilitate installation. The first housing 120 may be a metal housing. Specifically, the first housing 120 may be made of stainless steel, which is sturdy and corrosion-resistant. Of course, the first housing 120 may also be made of other materials, which is not specifically limited in this embodiment.

The second housing 112 may be made of an aluminum-plastic film. Specifically, the aluminum-plastic film may be composed of a nylon layer, an aluminum foil layer, a heat-seal layer, and an adhesive for bonding. The innermost layer is the heat-seal layer, which may be made of a polypropylene material and plays a role of sealing and bonding. The polypropylene material has good heat-seal adhesion performance with metal Ni and Al and the adhesive block of the tab 1111, and has electrolyte resistance, insulating performance and puncture resistance. The middle layer may be made of aluminum foil, and specifically, pure aluminum or aluminum-iron alloy may be used. Pure aluminum and aluminum-iron alloy can react with oxygen in air at room temperature to generate an oxide film, preventing the invasion of oxygen and moisture to protect the internal battery cell 111. The outermost layer may be made of nylon. Nylon has the characteristics of good impact resistance, good puncture resistance, heat resistance, insulating performance and good friction resistance, and is used to protect the aluminum foil layer from being scratched, and to protect interior of the battery 100 by reducing the shock and vibration to the battery 100 caused by dropping, etc.

The pole 130 is generally made of a material with good electrical conductivity, such as copper, aluminum, etc. The main function of the pole 130 is to conduct electrical charges of the tab 1111 of the battery cell 111 to the outside of the first housing 120 for convenient use.

According to the battery 100 provided by the embodiment of the present invention, the battery cell 111 is coated with a layer of the second housing 112, and the second housing 112 and the battery cell 111 are disposed in the first housing 120. The liquid leakage at an edge of the battery cell 111 where the stress is concentrated can be effectively prevented through the second housing 112, and the battery cell 111 can be prevented from directly bearing external force through the first housing 120. The opening 1121 may be reserved at a side of the second housing 112, and the skirt 1122 is disposed at an edge of the opening 1121. The skirt 1122 extends to a side of the pole 111 along a length direction of the battery cell 111, and the tab 1111 may extend out of the opening 1121. By being disposed at the side of the pole 130, the skirt 1122 does not need to occupy extra space of the battery 100 along the length direction of the battery 100, so that the internal structure of the battery 100 is more compact, and more space can be reserved for the battery cell 111, thereby improving the energy density of the battery 100.

In the above embodiment, a projection of the skirt 1122 in a thickness direction of the battery 100 may at least partially overlap with a projection of the pole 130 in the thickness direction of the battery 100. In practice, the skirt 1122 and the pole 130 are disposed side by side along the thickness direction of the battery 100.

In the above embodiment, an accommodating space is formed between the skirt 1122 and the body 1123, and the pole 130 is located in the accommodating space. The accommodating space is located at a side of the skirt 1122, and the pole 130 may extend into the accommodating space. With this arrangement, it can be ensured as much as possible that a projection of the pole 130 along the length direction of the battery cell 111 entirely falls on the battery cell 111, so that the internal structure of the battery 100 is more compact.

In the above embodiment, the tab 1111 may be provided with a connection part 1111a extending out of the skirt 1122, and the connection part 1111a is electrically connected with the first end 131 of the pole 130. The second end 132 of the pole 130 extends out of the first housing 120, and the connection part 1111a of the tab 1111 exposed from the skirt 1122 is used to be connected with the conductive pole 130, so as to conduct electrical charges of the tab 1111 to the outside of the first housing 120 of the battery 100 through the pole 130.

In the above embodiment, the connection part 1111a and the pole 130 may be connected in various ways. For example, referring to FIG. 4, the connection part 1111a may be bent and extend towards a direction of the battery cell 111, so that a side wall of the first end 131 of the pole 130 abuts against a surface of the connection part 1111a.

For another example, referring to FIG. 5, the connection part 1111a may be bent and extend to a surface of the second housing 112. The end of the connection part 1111a extends along the surface of the second housing 112 in a direction away from the skirt 1122, and both the side surface and the end surface of the first end 131 abut against the surface of the connection part 1111a.

Alternatively, as shown in FIG. 6, a cross section of the second end 132 of the pole 130 is larger than a cross section of the first end 131 of the pole 130. A step surface is formed at a junction of the second end 132 and the first end 131. The end of the connection part 1111a is bent along the step surface toward the first end 131 of the pole 130, and a surface of the end of the connection part 1111a abuts against the step surface.

As shown in FIG. 4 to FIG. 6, in the above embodiments, a heat dissipation layer 140 may further be provided between adj acent wall surfaces of the second housing 112 and the first housing 120. The heat dissipation layer 140 may use heat dissipation adhesive, and the heat dissipation adhesive may be applied to the outer wall of the second housing 112 to help better heat dissipation of the battery cell 111.

In the above embodiments, the battery may further include a protection element 150. Specifically, the protection element 150 may include a leading end 151 and a termination end 152. During implementation, the leading end 151 may be electrically connected with the pole 130, and the termination end 152 may be electrically connected with the tab 1111. The protection element 150 is mainly used for over-charge protection, over-discharge protection, over-current protection, and short-circuit protection of the battery 100. Specifically, for example, when the battery 100 is being charged, once a voltage of the battery 100 reaches the maximum voltage, the protection element 150 automatically cuts off the power, thereby stopping the charging. When the battery 100 is about to run out of electricity, the protection element 150 is also turned off and the discharge is ended. For another example, when the battery 100 is discharging, the protection element 150 generally has a maximum limit current (the requirements are different for different devices), and when the discharging current exceeds the limit current, the protection element 150 automatically cuts off the power. When the battery 100 is short-circuited due to an accident, the protection element 150 automatically cuts off the power in a very short time, so that the battery 100 is not active to prevent the battery 100 from being burnt and causing potential safety hazards. It should be noted that the overcurrent protection element 150 may generally be disposed at a positive tab.

In the above embodiments, a first insulating member may be disposed on the side wall of the skirt 1122, and/or the first insulating member may be disposed between the pole 130 and the second housing 112.

In the above embodiments, the battery may further include a pole piece 160. The pole piece 160 is disposed on a side of the first end 131 of the pole 130 away from the housing 120. The pole piece 160 may be connected to the first end 131 of the pole 130 by welding after the pole 130 is installed. On one hand, the arranged pole piece 160 may seal the hole in the housing 120 through which the pole 130 passes, and on the other hand, the pole piece 160 may increase the conductive contact area to facilitate the use of the battery 100. Specifically, the pole piece 160 may generally be made of a material with good electrical conductivity, such as copper, aluminum, etc.

In the above embodiments, a second insulating member 170 may be disposed between the first housing 120 and the pole 130, and the connection part 1111a of the tab 1111 is located between the second insulating member 170 and the pole 130. The second insulating member 170 may specifically be made of resin, plastic, etc. The main function of the second insulating member 170 is to isolate the first housing 120 from the pole piece 160, and to isolate the first housing 120 from the pole 130, so as to prevent electrical contact between the first housing 120 and the pole piece 160, and between the first housing 120 and the pole 130.

The battery 100 provided by the embodiments of the present invention includes the battery cell assembly 110, the first housing 120 and the pole 130 penetrating through the first housing 120. The first housing 120 is provided with an accommodating cavity, and the battery cell assembly 110 is disposed in the accommodating cavity. The battery cell assembly 110 includes the battery cell 111 and the second housing 112 covering the battery cell 111. The battery cell 111 is provided with the tab 1111. The second housing 112 includes the body 1123 and the skirt 1122 extending outwards from an edge of the side of the body 1123. The side of the second housing 112 facing the tab 1111 is provided with the opening 1121, and the tab 1111 extends out of the skirt 1122 from the opening 1121. The tab 1111 is electrically connected with the pole 130. According to the battery 100 provided by the embodiments of the present invention, the battery cell 111 is coated with the layer of the second housing 112, and the second housing 112 and the battery cell 111 are disposed in the first housing 120. The liquid leakage at an edge of the battery cell 111 where the stress is concentrated can be effectively prevented through the second housing 112, and the battery cell 111 can be prevented from directly bearing external force through the first housing 120. The opening 1121 may be reserved at a side of the second housing 112, and the skirt 1122 is disposed at an edge of the opening 1121. The skirt 1122 extends to a side of the pole 130 along the length direction of the battery cell 111, and the tab 1111 may extend out of the opening 1121. By being disposed at the side of the pole 130, the skirt 1122 does not need to occupy extra space of the battery 100 along the length direction of the battery 100, so that the internal structure of the battery 100 is more compact, and more space can be reserved for the battery cell 111, thereby improving the energy density of the battery 100.

In addition, the present invention further provides an electronic device, which includes any battery 100 in the above embodiments. The battery 100 includes the battery cell assembly 110, the first housing 120 and the pole 130 penetrating through the first housing 120. The first housing 120 is provided with an accommodating cavity, and the battery cell assembly 110 is disposed in the accommodating cavity. The battery cell assembly 110 includes the battery cell 111 and the second housing 112 covering the battery cell 111. The battery cell 111 is provided with the tab 1111. The second housing 112 includes the body 1123 and the skirt 1122 extending outwards from an edge of the side of the body 1123. The side of the second housing 112 facing the tab 1111 is provided with the opening 1121, and the tab 1111 extends out of the skirt 1122 from the opening 1121. The tab 1111 is electrically connected with the pole 130. According to the battery 100 provided by the embodiments of the present invention, the battery cell 111 is coated with the layer of the second housing 112, and the second housing 112 and the battery cell 111 are disposed in the first housing 120. The liquid leakage at an edge of the battery cell 111 where the stress is concentrated can be effectively prevented through the second housing 112, and the battery cell 111 can be prevented from directly bearing external force through the first housing 120. The opening 1121 may be reserved at a side of the second housing 112, and the skirt 1122 is disposed at an edge of the opening 1121. The skirt 1122 extends to a side of the pole 130 along the length direction of the battery cell 111, and the tab 1111 may extend out of the opening 1121. By being disposed at the side of the pole 130, the skirt 1122 does not need to occupy extra space of the battery 100 along the length direction of the battery 100, so that the internal structure of the battery 100 is more compact, and more space can be reserved for the battery cell 111, thereby improving the energy density of the battery 100. Since the sealing performance and energy density of the battery 100 in the electronic device are improved, the electronic device provided in this embodiment has a higher cost performance.

Finally, it should be noted that the foregoing embodiments are merely intended for describing the technical solutions of the present invention other than limiting the present invention.

## Claims

1. A battery (100), comprising a battery cell assembly (110), a first housing (120) and a pole (130) penetrating through the first housing (120), wherein the first housing (120) is provided with an accommodating cavity, and the battery cell assembly (110) is disposed in the accommodating cavity;
the battery cell assembly (110) comprises a battery cell (111) and a second housing (112) covering the battery cell (111), wherein the battery cell (111) is provided with a tab (1111), and the second housing (112) comprises a body (1123) and a skirt (1122) extending outwards from an edge of a side of the body (1123);
a side of the second housing (112) facing the tab (1111) is provided with an opening (1121), the tab (1111) extends out of the skirt (1122) from the opening (1121), and the tab (1111) is electrically connected with the pole (130), and
an accommodating space is formed between the skirt (1122) and the body (1123), and the pole (130) is located in the accommodating space.

2. The battery (100) according to claim 1, wherein a projection of the skirt (1122) in a thickness direction of the battery (100) at least partially overlaps with a projection of the pole (130) in the thickness direction of the battery (100).

3. The battery (100) according to claim 1, wherein the skirt (1122) and the pole (130) are disposed side by side along a thickness direction of the battery (100).

4. The battery (100) according to claim 1, wherein the tab (1111) has a connection part (1111a) extending outside the skirt (1122), and the connection part (1111a) is electrically connected with a first end (131) of the pole (130).

5. The battery (100) according to claim 4, wherein the connection part (1111a) is bent and extends towards a direction of the battery cell (111), and a side wall of the first end (131) of the pole (130) abuts against a surface of the connection part (1111a).

6. The battery (100) according to claim 5, wherein the connection part (1111a) is bent and extends to a surface of the second housing (112), an end of the connection part (1111a) extends along the surface of the second housing (112) in a direction away from the skirt (1122), and both a side surface and an end surface of the first end (131) abut against the surface of the connection part (1111a).

7. The battery (100) according to claim 4, wherein a cross section of a second end (132) of the pole (130) is larger than a cross section of the first end (131) of the pole (130), a step surface is formed at a junction of the second end (132) and the first end (131), the end of the connection part (1111a) is bent along the step surface toward the first end (131) of the pole (130), and a surface of the end of the connection part (1111a) abuts against the step surface.

8. The battery (100) according to any one of claims 1 to 7, wherein the first housing (120) is a metal housing, and the second housing (112) is an aluminum-plastic film.

9. The battery (100) according to any one of claims 1 to 7, wherein a heat dissipation layer (140) is disposed between adj acent wall surfaces of the second housing (112) and the first housing (120); or,
wherein the battery (100) further comprises a protection element (150), wherein the protection element (150) comprises a leading end (151) and a termination end (152), the leading end (151) is electrically connected with the pole (130), and the termination end (152) is electrically connected with the tab (1111).

10. The battery (100) according to any one of claims 1 to 7, wherein a first insulating member is disposed on a side wall of the skirt (1122), and/or the first insulating member is disposed between the pole (130) and the second housing (112); or,
wherein a second insulating member (170) is disposed between the first housing (120) and the pole (130), the connection part (1111a) of the tab (1111) is located between the second insulating member (170) and the pole (130), and the second insulating member (170) is made of resin or plastic.

11. The battery (100) according to any one of claims 1 to 7, wherein the battery cell (111) is of a wound structure or a laminated structure; or,
wherein the pole (130) is made of copper or aluminum.

12. The battery (100) according to claim 8, wherein the aluminum-plastic film is formed by bonding nylon, aluminum foil and polypropylene.

13. The battery (100) according to any one of claims 4 to 7, further comprising a pole piece (160), wherein the pole piece (160) is disposed on a side of the first end (131) of the pole (130) away from the first housing (120);
wherein the pole piece (160) is welded to the first end (131) of the pole (130).

14. An electronic device, comprising the battery (100) according to any one of claims 1 to 13.

## Patentansprüche

1. Batterie (100), aufweisend eine Batteriezellenanordnung (110), ein erstes Gehäuse (120) und einen Pol (130), der durch das erste Gehäuse (120) hindurchtritt, wobei das erste Gehäuse (120) mit einem Aufnahmehohlraum versehen ist und die Batteriezellenanordnung (110) in dem Aufnahmehohlraum angeordnet ist;
die Batteriezellenanordnung (110) umfasst eine Batteriezelle (111) und ein zweites Gehäuse (112), das die Batteriezelle (111) abdeckt, wobei die Batteriezelle (111) mit einer Lasche (1111) versehen ist und das zweite Gehäuse (112) einen Körper (1123) und eine Schürze (1122) umfasst, die sich von einem Rand einer Seite des Körpers (1123) nach außen erstreckt;
eine der Lasche (1111) zugewandte Seite des zweiten Gehäuses (112) ist mit einer Öffnung (1121) versehen, die Lasche (1111) erstreckt sich ausgehend von der Öffnung (1121) aus der Schürze (1122) heraus, und die Lasche (1111) ist elektrisch mit dem Pol (130) verbunden, und
zwischen der Schürze (1122) und dem Körper (1123) ist ein Aufnahmeraum ausgebildet, und der Pol (130) befindet sich in dem Aufnahmeraum.

2. Batterie (100) nach Anspruch 1, wobei eine Projektion der Schürze (1122) in einer Dickenrichtung der Batterie (100) eine Projektion des Pols (130) in der Dickenrichtung der Batterie (100) zumindest teilweise überlappt.

3. Batterie (100) nach Anspruch 1, wobei die Schürze (1122) und der Pol (130) entlang einer Dickenrichtung der Batterie (100) nebeneinander angeordnet sind.

4. Batterie (100) nach Anspruch 1, wobei die Lasche (1111) ein Verbindungsteil (1111a) aufweist, das sich außerhalb der Schürze (1122) erstreckt, und das Verbindungsteil (1111a) elektrisch mit einem ersten Ende (131) des Pols (130) verbunden ist.

5. Batterie (100) nach Anspruch 4, wobei das Verbindungsteil (1111a) gebogen ist und sich in einer Richtung der Batteriezelle (111) erstreckt und eine Seitenwand des ersten Endes (131) des Pols (130) an einer Oberfläche des Verbindungsteils (1111a) anliegt.

6. Batterie (100) nach Anspruch 5, wobei das Verbindungsteil (1111a) gebogen ist und sich bis zu einer Oberfläche des zweiten Gehäuses (112) erstreckt, sich ein Ende des Verbindungsteils (1111a) entlang der Oberfläche des zweiten Gehäuses (112) in einer von der Schürze (1122) wegführenden Richtung erstreckt und sowohl eine Seitenfläche als auch eine Endfläche des ersten Endes (131) an der Oberfläche des Verbindungsteils (1111a) anliegen.

7. Batterie (100) nach Anspruch 4, wobei ein Querschnitt eines zweiten Endes (132) des Pols (130) größer als ein Querschnitt des ersten Endes (131) des Pols (130) ist, an einer Übergangsstelle zwischen dem zweiten Ende (132) und dem ersten Ende (131) eine Stufenfläche ausgebildet ist, das Ende des Verbindungsteils (1111a) entlang der Stufenfläche in Richtung des ersten Endes (131) des Pols (130) gebogen ist und eine Oberfläche des Endes des Verbindungsteils (1111a) an der Stufenfläche anliegt.

8. Batterie (100) nach einem der Ansprüche 1 bis 7, wobei das erste Gehäuse (120) ein Metallgehäuse ist und das zweite Gehäuse (112) eine Aluminium-Kunststoff-Folie ist.

9. Batterie (100) nach einem der Ansprüche 1 bis 7, wobei eine Wärmeableitungsschicht (140) zwischen benachbarten Wandflächen des zweiten Gehäuses (112) und des ersten Gehäuses (120) angeordnet ist; oder,
wobei die Batterie (100) ferner ein Schutzelement (150) umfasst, wobei das Schutzelement (150) ein vorderes Ende (151) und ein Abschlussende (152) umfasst, das vordere Ende (151) elektrisch mit dem Pol (130) verbunden ist und das Abschlussende (152) elektrisch mit der Lasche (1111) verbunden ist.

10. Batterie (100) nach einem der Ansprüche 1 bis 7, wobei ein erstes Isolierelement an einer Seitenwand der Schürze (1122) angeordnet ist und/oder das erste Isolierelement zwischen dem Pol (130) und dem zweiten Gehäuse (112) angeordnet ist; oder,
wobei ein zweites Isolierelement (170) zwischen dem ersten Gehäuse (120) und dem Pol (130) angeordnet ist, sich das Verbindungsteil (1111a) der Lasche (1111) zwischen dem zweiten Isolierelement (170) und dem Pol (130) befindet und das zweite Isolierelement (170) aus Harz oder Kunststoff hergestellt ist.

11. Batterie (100) nach einem der Ansprüche 1 bis 7, wobei die Batteriezelle (111) eine Wickelstruktur oder eine laminierte Struktur aufweist; oder,
wobei der Pol (130) aus Kupfer oder Aluminium hergestellt ist.

12. Batterie (100) nach Anspruch 8, wobei die Aluminium-Kunststoff-Folie durch Verbinden von Nylon, Aluminiumfolie und Polypropylen gebildet ist.

13. Batterie (100) nach einem der Ansprüche 4 bis 7, ferner umfassend ein Polstück (160), wobei das Polstück (160) auf einer von dem ersten Gehäuse (120) abgewandten Seite des ersten Endes (131) des Pols (130) angeordnet ist;
wobei das Polstück (160) an das erste Ende (131) des Pols (130) geschweißt ist.

14. Elektronische Vorrichtung, umfassend die Batterie (100) nach einem der Ansprüche 1 bis 13.

## Revendications

1. Batterie (100), comprenant un ensemble de cellule de batterie (110), un premier boîtier (120) et un pôle (130) traversant le premier boîtier (120), dans laquelle le premier boîtier (120) est pourvu d'une cavité de réception, et l'ensemble de cellule de batterie (110) est disposé dans la cavité de réception ;
l'ensemble de cellule de batterie (110) comprend une cellule de batterie (111) et un second boîtier (112) recouvrant la cellule de batterie (111), où la cellule de batterie (111) est pourvue d'une languette (1111), et le second boîtier (112) comprend un corps (1123) et une jupe (1122) s'étendant vers l'extérieur à partir d'un bord d'un côté du corps (1123) ;
un côté du second boîtier (112) faisant face à la languette (1111) est pourvu d'une ouverture (1121), la languette (1111) s'étend hors de la jupe (1122) à partir de l'ouverture (1121), et la languette (1111) est électriquement connectée au pôle (130), et
un espace de réception est formé entre la jupe (1122) et le corps (1123), et le pôle (130) est situé dans l'espace de réception.

2. Batterie (100) selon la revendication 1, dans laquelle une projection de la jupe (1122) dans une direction d'épaisseur de la batterie (100) chevauche au moins partiellement une projection du pôle (130) dans la direction d'épaisseur de la batterie (100).

3. Batterie (100) selon la revendication 1, dans laquelle la jupe (1122) et le pôle (130) sont disposés côte à côte le long d'une direction d'épaisseur de la batterie (100).

4. Batterie (100) selon la revendication 1, dans laquelle la languette (1111) présente une partie de connexion (1111a) s'étendant à l'extérieur de la jupe (1122), et la partie de connexion (1111a) est électriquement connectée à une première extrémité (131) du pôle (130).

5. Batterie (100) selon la revendication 4, dans laquelle la partie de connexion (1111a) est pliée et s'étend en une direction de la cellule de batterie (111), et une paroi latérale de la première extrémité (131) du pôle (130) est en appui contre une surface de la partie de connexion (1111a).

6. Batterie (100) selon la revendication 5, dans laquelle la partie de connexion (1111a) est pliée et s'étend jusqu'à une surface du second boîtier (112), une extrémité de la partie de connexion (1111a) s'étend le long de la surface du second boîtier (112) dans une direction s'éloignant de la jupe (1122), et une surface latérale et une surface d'extrémité de la première extrémité (131) sont toutes deux en appui contre la surface de la partie de connexion (1111a).

7. Batterie (100) selon la revendication 4, dans laquelle une section transversale d'une seconde extrémité (132) du pôle (130) est plus grande qu'une section transversale de la première extrémité (131) du pôle (130), une surface d'épaulement est formée à une jonction de la seconde extrémité (132) et de la première extrémité (131), l'extrémité de la partie de connexion (1111a) est pliée le long de la surface d'épaulement vers la première extrémité (131) du pôle (130), et une surface de l'extrémité de la partie de connexion (1111a) est en appui contre la surface d'épaulement.

8. Batterie (100) selon l'une quelconque des revendications 1 à 7, dans laquelle le premier boîtier (120) est un boîtier métallique, et le second boîtier (112) est un film aluminium-plastique.

9. Batterie (100) selon l'une quelconque des revendications 1 à 7, dans laquelle une couche de dissipation thermique (140) est disposée entre des surfaces de paroi adjacentes du second boîtier (112) et du premier boîtier (120) ; ou,
dans laquelle la batterie (100) comprend en outre un élément de protection (150), où l'élément de protection (150) comprend une extrémité de tête (151) et une extrémité de terminaison (152), l'extrémité de tête (151) est électriquement connectée au pôle (130), et l'extrémité de terminaison (152) est électriquement connectée à la languette (1111).

10. Batterie (100) selon l'une quelconque des revendications 1 à 7, dans laquelle un premier élément isolant est disposé sur une paroi latérale de la jupe (1122), et/ou le premier élément isolant est disposé entre le pôle (130) et le second boîtier (112) ; ou,
dans laquelle un second élément isolant (170) est disposé entre le premier boîtier (120) et le pôle (130), la partie de connexion (1111a) de la languette (1111) est située entre le second élément isolant (170) et le pôle (130), et le second élément isolant (170) est fabriqué en résine ou en plastique.

11. Batterie (100) selon l'une quelconque des revendications 1 à 7, dans laquelle la cellule de batterie (111) présente une structure enroulée ou une structure stratifiée ; ou,
dans laquelle le pôle (130) est fabriqué en cuivre ou en aluminium.

12. Batterie (100) selon la revendication 8, dans laquelle le film aluminium-plastique est formé par liaison de nylon, d'une feuille d'aluminium et de polypropylène.

13. Batterie (100) selon l'une quelconque des revendications 4 à 7, comprenant en outre une pièce polaire (160), dans laquelle la pièce polaire (160) est disposée sur un côté de la première extrémité (131) du pôle (130) éloigné du premier boîtier (120) ;
dans laquelle la pièce polaire (160) est soudée à la première extrémité (131) du pôle (130).

14. Dispositif électronique, comprenant la batterie (100) selon l'une quelconque des revendications 1 à 13.
